# EUROPÄISCHE PATENTSCHRIFT

(11) **EP 1 333 908 B1**
(45) Veröffentlichungstag und Bekanntmachung des Hinweises auf die Patenterteilung: **05.07.2006**
(21) Anmeldenummer: 01987689.5
(22) Anmeldetag: 17.10.2001
(51) Int. Cl.: B01D 53/56, B01D 53/94, F01N 3/08, F01N 3/20, F01N 7/08

(54) **ABGASREINIGUNGSANLAGE UND VERFAHREN ZUR ABGASREINIGUNG**
EXHAUST GAS CLEANING SYSTEM AND METHOD FOR CLEANING EXHAUST GAS
INSTALLATION D'EPURATION DES GAZ D'ECHAPPEMENT ET PROCEDE D'EPURATION DES GAZ D'ECHAPPEMENT

(30) Priorität: 17.10.2000 DE 10051360; 31.08.2001 DE 10142804
(43) Veröffentlichungstag der Anmeldung: 13.08.2003
(73) Patentinhaber: ROBERT BOSCH GMBH, 70442 Stuttgart (DE)
(72) Erfinder: HUPFELD, Bernd, 38518 Gifhorn (DE); NAU, Michael, 72175 Dornhan/Aischfeld (DE); SCHALLER, Johannes, 71229 Leonberg (DE); WEBER, Georg, 74336 Brackenheim (DE); BAREIS, Marc, 71706 Markgroeningen (DE); HARNDORF, Horst, 34270 Schauenburg (DE); UNGER, Stefan, 70179 Stuttgart (DE)
(86) Internationale Anmeldenummer: PCT/DE2001/003919
(87) Internationale Veröffentlichungsnummer: WO 2002/032552

(56) Entgegenhaltungen:
- DE-A- 4 408 763
- DE-A- 19 526 143
- DE-A- 19 853 162
- US-A- 4 945 722
- US-A- 5 406 790
- US-A- 5 611 198

## Beschreibung

Die Erfindung betrifft eine Abgasreinigungsanlage mit einer regenerierbaren Abgasnachbehandlungseinheit. Die Erfindung betrifft ferner ein Verfahren zur Abgasreinigung, bei dem ein Abgasstrom durch eine regenerierbare Abgasnachbehandlungseinheit geleitet wird.

### Stand der Technik

Eine gattungsgemäße Abgasreinigungsanlage ist beispielsweise aus der DE 197 31 865 C2 bekannt. Der dort beschriebene Abgaskatalysator dient vor allem der Reduzierung von Stickoxiden (NOₓ) im Abgas von Dieselmotoren. In dem Oxidationskatalysator der Katalysatoranordnung wird zunächst das im Abgas vorhandene NO in NO₂ umgewandelt. In der nachfolgenden Speicherkomponente werden die Stickoxide dann beispielsweise als Bariumnitrat gespeichert. Die beladenen Speicherkatalysatoren müssen von Zeit zu Zeit regeneriert werden, wobei die Stickoxide zu Stickstoff reduziert und an das Abgas abgegeben werden. Für diese Regeneration ist es erforderlich, im Abgasstrom Fettphasen bei einem Luftverhältnis λ < 1 zu realisieren, was insbesondere bei Dieselmotoren problematisch ist Es hat sich als nützlich herausgestellt, für die Regeneration des Speicherkatalysators den Abgasstrom anzufetten. Die Anfettung, das heißt das Bereitstellen eines Reduktionsmittels, kann durch Beimischen von Kraftstoff (HC) realisiert werden. Es hat sich als nachteilig erwiesen, dass bei der Regeneration eines zu stark beladenen Katalysators unerwünschte Nebenprodukte entstehen. Das Entstehen dieser unerwünschten Nebenprodukte wird ebenfalls durch eine zu geringe Anfettung des Abgasstroms begünstigt. Eine Erhöhung der Anfettung des Abgasstroms zieht jedoch einen zusätzlichen Kraftstoffverbrauch nach sich, wobei dieser zusätzliche Kraftstoffverbrauch unter anderem durch die Sauerstoffmenge bestimmt wird, die im Abgas vorhanden und/oder im vorgeschalteten Oxidationskatalysator eingelagert ist.

Es ist daher erwünscht, die notwendigerweise beizumischende Kraflstoffmenge zu minimieren und gleichzeitig die Emission von unerwünschten Nebenprodukten zu verringern. Ferner soll die Abgasanlage permanent, das heißt auch während der Regeneration, für eine Abgasreinigung zur Verfügung stehen.

Aus der US 5 406 790 ist eine Abgasnachbehandlungsanordnung mit zwei Abgasstrompfaden bekannt, die über Abgasklappen zumindest teilweise schließbar sind.

### Vorteile der Erfindung

Die Erfindung baut auf der gattungsgemäßen Abgasreinigungsanlage dadurch auf, dass ein verstellbarer Strömungsteiler vorgesehen ist, mittels welchem in einer Regenerationsstellung ein Abgasteilstrom erzeugbar ist, welcher eine Abgasnachbehandlungseinheit durchströmt, wobei der verbleibende zweite Teilstrom mindestens eine weitere Abgasnachbehandlungseinheit durchströmt. Aufgrund des verstellbaren Strömungsteilers ist es möglich, einen Teilstrom zu erzeugen, welcher die Regeneration der Abgasnachbehandlungseinheit bewerkstelligt. Gleichzeitig strömt der Abgashauptstrom durch einen andere Abgasnachbehandlungseinheit, so dass die Kontinuität der Abgasreinigung auch während der Regenerationsphase der Abgasnachbehandlungseinheit gewährleistet ist.

Vorteilhaft ist es hierbei, den Strömungsteiler pneumatisch ansteuerbar, insbesondere elektropneumatisch ansteuerbar, auszuführen. So besteht insbesondere die Möglichkeit, bereits in einem Kraftfahrzeug bestehende Pneumatikvorrichtungen zur Ansteuerung der Abgasreinigungsanlage zu verwenden.

Hierbei durchströmt der zweite Teilstrom in der Regenerationsstellung des verstellbaren Strömungsteilers einen DENOX-Katalysator. Das herkömmliche DENOX-Katalysatorprinzip kann also verwendet werden, um während der Regenerationsphasen des Speicherkatalysators eine Abgasreinigung aufrecbtzuerhalten. Da die Regenerationsphasen des Speicherkatalysators einen wesentlich geringeren Zeitraum einnehmen als die Beladungsphasen, wird während des größten Teils der Betriebsdauer eine Abgasreinigung durch den Speicherkatalysator erfolgen, was im Hinblick auf die Qualität der Abgasreinigung wünschenswert ist. Hierbei ist der DENOX-Katalysator parallel zu und in baulicher Einheit mit dem Speicherkatalysator angeordnet. Diese Anordnung bietet sich zum einen aus strömungstechnischen Gründen an, da so die Richtung des Abgasstroms nur minimal geändert werden muss. Andererseits lässt sich so auch ein Wärmeübergang zwischen dem DENOX-Katalysator und dem Speicherkatalysator realisieren, was im Hinblick auf den Wirkungsgrad des Speicherkatalysators vorteilhaft ist. In diesem Zusammenhang ist es besonders nützlich, dass der DENOX-Katalysator den Speicherkatalysator umgibt. Hierdurch wird der Wärmeübergang zwischen dem DENOX-Katalysator und dem Speicherkatalysator optimiert. Es ist sinnvoll und vorteilhaft, dem Speicherkatalysator und den weiteren Katalysatoren wie dem DENOX-Katalysator einen Oxidationskatalysator nachzuschalten, der unverbrannte Kohlenwasserstoffe oxidiert und so einen HC-Durchbruch vermeidet.

Vorzugsweise ist der verstellbare Strömungsteiler in Strömungsrichtung vor der beispielsweise als Speicherkatalysator ausgeführten Abgasnachbehandlungseinheit angeordnet. Der Strömungsteiler wirkt also unmittelbar auf das einströmende Abgas ein, so dass in zuverlässiger Weise eine Aufteilung des Abgasstroms zur Bereitstellung eines Abgasteilstroms zur Verfügung gestellt werden kann.

Es kann aber auch vorteilhaft sein, dass der verstellbare Strömungsteiler in Strömungsrichtung hinter der Abgasnachbehandlungseinheit angeordnet ist. Aufgrund der Vermittlung durch die Strömungen in der Abgasreinigungsanlage beeinflusst der hinter dem Speicherkatalysator angeordnete verstellbare Strömungsteiler die Strömungsverhältnisse vor dem Eintritt in den Speicherkatalysator, so dass auch hierdurch ein Abgasteilstrom zur Verfügung gestellt werden kann. Gleichzeitig wird aufgrund der besseren Durchströmung der gesamten Anordnung der Wämehaushalt verbessert, was im Hinblick auf die Abgasreinigung durch den Speicherkatalysator vorteilhaft ist.

Bevorzugt ist der verstellbare Strömungsteiler in Strömungsrichtung hinter einem ersten, der als Speicherkatalysator ausgeführten Abgasnachbehandlungseinheit vorgeschalteten, Oxidationskatalysator angeordnet. Der Abgasteilstrom, welcher beispielsweise mit einem Reduktionsmittel versetzt den Speicherkatalysator zur Regeneration durchströmt, muss also nicht den ersten Oxidationskatalysator durchströmen, was im Hinblick auf eine effiziente Nutzung des Reduktionsmittels nützlich ist. Durch diese Anordnung kommt es nämlich nicht zu einem Abbau des Reduktionsmittels im ersten Oxidationskatalysator.

Ferner kann nützlich sein, dass der verstellbare Strömungsteiler in Strömungsrichtung vor einem zweiten Oxidationskatalysator angeordnet ist. Auf diese Weise ist sichergestellt, dass die beispielsweise als Speicherlcatalysator ausgeführte Abgasnachbehandlungseinheit unmittelbar auf einen Oxidationskatalysator folgt, so dass der Abgasstrom im Hinblick auf die Umsetzung im Speicherkatalysator vorbereitet ist.

Die Erfindung baut auf dem gattungsgemäßen Verfahren dadurch auf, dass in einer Regenerationsstellung eines verstellbaren Strömungsteilers ein Abgasteilstrom erzeugt wird, dass der Abgasteilstrom eine Abgasnachbehandlungseinheit durchströmt und dass der verbleibende Abgashauptstrom mindestens eine andere Abgasnachbehandlungseinheit durchströmt. Aufgrund des verstellbaren Strömungsteilers ist es möglich, einen Teilstrom zu erzeugen, welcher die Regeneration der Abgasnachbehandlungseinheit bewerkstelligt. Gleichzeitig strömt der Abgashauptstrom durch einen andere
Abgasnachbehandlungseinheit, so dass die Kontinuität der Abgasreinigung auch während der Regenerationsphase der Abgasnachbehandlungseinheit gewährleistet ist Dabei durchströmt der Abgashauptstrom vorzugsweise in der Regenerationsstellung des verstellbaren Strömungsielers einen DENOX-Katalysator. Das herkömmliche DENOX-Katalysatorprinzip kann also verwendet werden, um während der Regenerationsphasen einer beispielsweise als Speicherkatalysator ausgeführten Abgasnachbehandlungseinheit eine Abgasreinigung aufrechtzuerhalten. Da die Regenerationsphasen des Speicherkatalysators einen wesentlich geringeren Zeitraum einnehmen als die Beladungsphasen, wird während des größten Teils der Betriebsdauer eine Abgasreinigung durch den Speicherkatalysator erfolgen, was im Hinblick auf die Qualität der Abgasreinigung wünschenswert ist.

Vorzugsweise durchströmt der Abgasstrom vor dem Erzeugen des Abgasteilstroms einen ersten Oxidationskatalysator, und der Abgasteilstrom durchströmt einen zweiten Oxidationskatalysator. Der Abgasteilstrom, welcher mit einem Reduktionsmittel versetzt den Speicherkatalysator zur Regeneration durchströmt, muss also nicht den ersten Oxidationskatalysator durchströmen, was im Hinblick auf eine effiziente Nutzung des Reduktionsmittels nützlich ist. Durch diese Anordnung kommt es nämlich nicht zu einem Abbau des Reduktionsmittels im ersten Oxidationskatalysator. Der zweite Oxidationskatalysator stellt sicher, dass der Speicherkatalysator unmittelbar auf einen Oxidationskatalysator folgt, so dass der Abgasstrom im Hinblick auf die Umsetzung im Speicherkatalysator vorbereitet ist.

Es ist bevorzugt, wenn der Abgashauptstrom mit dem Abgasteilstrom nach dem Durchströmen der jeweiligen Kalatysatoren vereinigt wird. Somit kann der gesamte Abgasstrom nachfolgend in die Umwelt emittiert werden.

Vorzugsweise wird als Reduktionsmittel Dieselkraftstoff verwendet.

Der Erfindung liegt die überraschende Erkenntnis zugrunde, dass durch die Bereitstellung eines verstellbaren Strömungsteilers eine kontinuierliche Abgasreinigung auch während der Regeneration beispielsweise eines Speichakatalysators möglich ist. Indem für die Abgasreinigung während der Regenerierung des Speicherkatalysators ein DENOX-Katalysator verwendet wird, steht eine kostengünsfige Möglichkeit für einen umweltverträglichen Betrieb zur-Verfugung.

Die Erfindung ist sowohl bei Benzin- als auch bei Diesel-Brennkraftmaschinen einsetzbar.

### Zeichnungen

Ausführungsbeispiele der Erfindung sind in der Zeichnung dargestellt und in der nachfolgenden Beschreibung näher erläutert.

Dabei zeigen:
- Figur 1: eine Abgasreinigungsanlage, welche von Abgas durchströmt wird;
- Figur 2: eine erste Abgasreinigungsanlage;
- Figur 3: eine zweite Abgasreinigungsanlage;
- Figur 4: eine dritte Abgasreinigungsanlage;
- Figur 5: eine erfindungsgemäße Ausführungsform einer Abgasreinigungsanlage.
- Figur 6: eine weitere Abgasreinigungsanlage;
- Figur 7: eine weitere Abgasreinigungsanlage;
- Figur 8: einen Teil einer Abgasreinigungsanlage;
- Figur 9: eine weitere Abgasreinigungsanlage, und
- Figur 10: die schematische Darstellung einer weiteren Abgasreinigungsanlage.

### Beschreibung der Ausführungsbeispiele

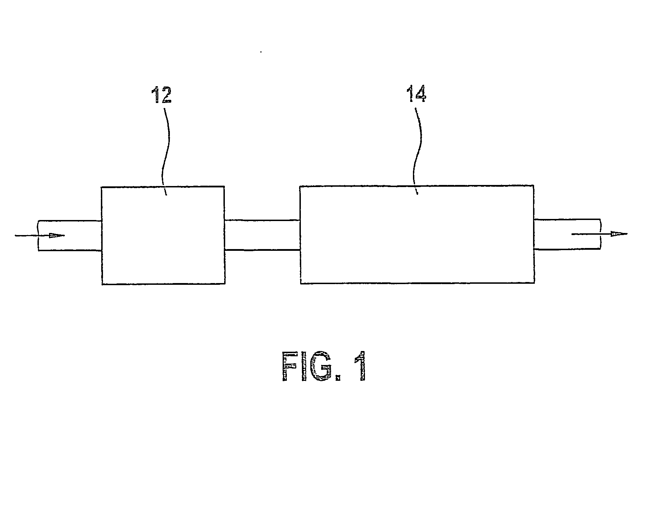

Figur 1 zeigt eine Abgasreinigungsanlage mit einem Oxidationskatalysator 12 und einem Speicherkatalysator 14. Durch die Pfeile ist die Strömungsrichtung des Abgases angedeutet, welche beispielsweise bei Normalbetrieb einer Abgasanlage vorliegt. In dem Oxidationskatalysator 12 wird das in dem Abgas vorhandene NO in NO₂ umgewandelt. Dieses wird dann beispielsweise als Bariumnitrat in der Speicherkomponente 14 gespeichert, so dass aus der Abgasanlage gereinigtes Abgas in die Umwelt emittiert wird. Beschickt man die Abgasreinigungsanlage zur Regeneration des Abgasstroms mit einem angefetteten Abgasstrom in der in Figur 1 angedeuteten Strömungsrichtung, so werden Abgas, Stickstoff(N₂), Wasser (H₂O), Kohlendioxid (CO₂), Kraftstoff (HC), Kohlenmonoxid (CO) und Stickoxid (NO) in die Umwelt emittiert. Es werden also unerwünschte Nebenprodukte emittiert, insbesondere bei einem zu stark beladenen Speicherkatalysator oder bei zu geringer Anfettung des Abgasteilstroms.

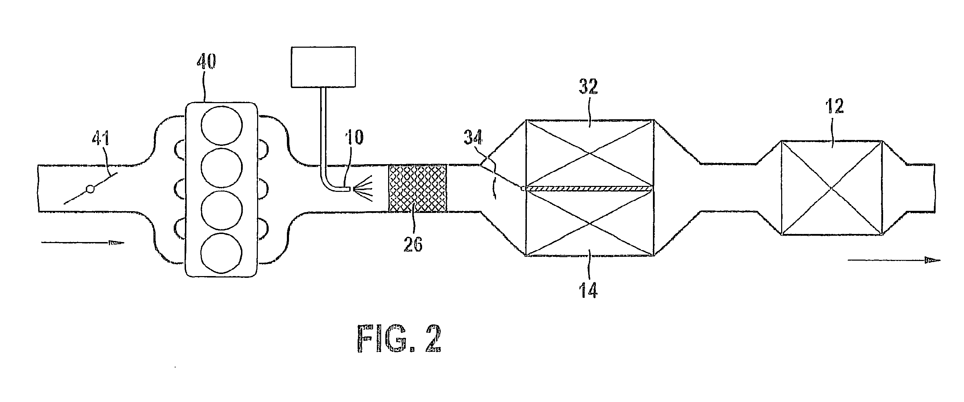

Figur 2 zeigt schematisch eine Abgasreinigungsanlage. Diese umfaßt einen Speicherkatalysator 14 mit einem parallel geschalteten aktiven DENOX-Katalysator 32 in baulicher Einheit. Nachgeschaltet ist ein Oxidationskatalysator 12. Eine Zuführeinrichtung 10 zum externen Zudosieren von Reduktionsmittel (Kraftstoff) sowie ein katalytischer Mischer 26 sind der Katalysatoreinheit vorgeschaltet. Als Strömungsteiler dient die Abgasklappe 34, die kennfeldabhängig angesteuert wird, so daß je nach Betriebspunkt der Speicherkatalysator 14 oder der aktive DENOX-Katalysator 32 im Vollstrom betrieben werden kann. Somit ist im gesamten Betriebsbereich des Motors eine zumindest teilweise Reduktion der Stickoxide möglich. Außerdem wird eine Überladung des Speicherkatalysators bei hohen Lasten und/oder hohen Stickoxid-Emissionen verhindert.

Da der Speicherkatalysator 14 in der Lage ist, über einen relativ großen Zeitraum verglichen mit der Regenerationsphase (ca. zwei Minuten zu einigen Sekunden) Stickoxide zu speichern, kommt der DENOX-Katalysator 32 nur in vergleichsweise kleinen Zeitintervallen zum Einsatz und die hohe Qualität der Abgasreinigung durch den Speicherkatalysator 14 ist gewährleistet.

Durch die bauliche Einheit von Speicher- und DENOX-Katalysator wird das starke Auskühlen des nicht betriebenen (nicht durchströmten) Katalysators vermieden.

Die externe Reduktionsmittelzufuhr durch die Zuführeinrichtung 10 dient sowohl dem Speicherkatalysator 14 als auch dem aktiven DENOX-Katalysator 32. Der katalytische Mischer 26 ermöglicht sowohl die Vermischung des Reduktionsmittels mit dem Abgas als auch das Cracken des Reduktionsmittels. Durch Zugabe des Reduktionsmittels (Kraftstoff) während der Warmlaufphase ist es möglich, die Katalysatortemperatur anzuheben, um ein Anspringen des Katalysators zu erleichtern.

Mittels einer Drosselklappe 41 vor dem Eingang des Motors 40 kann während der Regenerationsphase der Motor 40 gedrosselt werden, um das Luftverhältnis im Abgas auf ein gewisses Minimum (z.B. λ = 1,3) zu verringern. Dadurch wird die nachfolgende Beseitigung von Sauerstoff im Abgas mittels des Reduktionsmittels erleichtert.

Der dem Katalysatorsystem nachgeschaltete Oxidationskatalysator 12 oxidiert einströmende unverbrannte Kohlenwasserstoffe und/oder Reduktionsmittel und vermeidet auf diese Weise einen HC-Durchbruch.

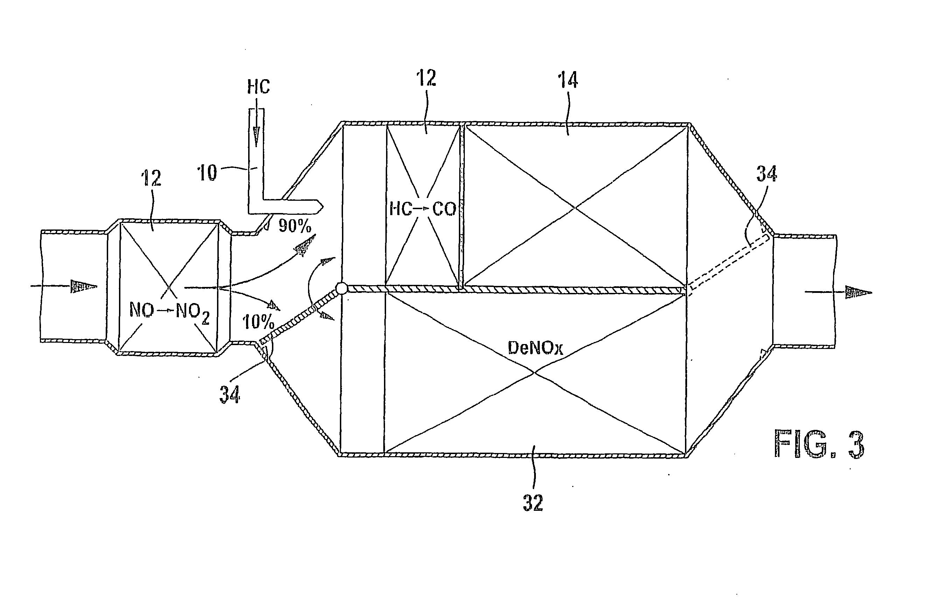

In Figur 3 ist eine weitere Abgasreinigungsanlage dargestellt. Die Prozentangaben in den Figuren und in der Beschreibung sind relative Näherungswerte, welche auf den gesamten Abgasstrom bezogen sind. Die Abgasreinigungsanlage umfasst einen ersten Oxidationskatalysator 12 und einen zweiten Oxidationskatalysator 12, welcher in Strömungsrichtung einem Speicherkatalysator 14 vorgeschaltet ist. Weiterhin ist ein DENOX-Katalysator vorgesehen, der parallel zu dem zweiten Oxidationskatalysator 12 und dem Speicherkatalysator 14 angeordnet ist. Zur Erzeugung eines Abgasteilstroms ist ein verstellbarer Strömungsteiler in Form einer Klappe 34 vorgesehen, wobei die Klappe optional vor der Katalysatoranordnung oder hinter der Katalysatoranordnung positioniert sein kann. Der erste Oxidationskatalysator 12 dient der Oxidation von NO zu NO₂. Im dem zweiten Oxidationskatalysator 12 findet eine Oxidation von HC zu CO statt.

Bei der Ausführungsform mit einer Klappe 34 vor der Katalysatoranordnung wird in der dargestellten Stellung der Klappe 34 ein Abgasstrom nach dem Durchströmen des ersten Oxidationskatalysators 12 zur Abgasreinigung dem zweiten Oxidationskatalysator 12 und dem Speicherkatalysator 14 zugeführt. Wird die Klappe 34 vor der Katalysatoranordnung nach oben verschwenkt, so durchströmt der Abgashauptstrom einen konventionellen DENOX-Katalysator 32, so dass eine Abgasreinigung in dem DENOX-Katalysator erfolgen kann. Ein Abgasteilstrom strömt in dieser Regenerationsstellung der Klappe 34 durch den zweiten Oxidationskatalysator 12 und den Speicherkatalysator 14, so dass gleichzeitig eine Regeneration des Speicherkatalysators 14 und eine Abgasreinigung des Abgashauptstroms im DENOX-Katalysator erfolgen können. Zum Zwecke der Regeneration wird dem Abgasteilstrom von der Zuführeinrichtung 10 ein Reduktionsmittel zugesetzt, im vorliegenden Falle Kraftstoff (HC) .

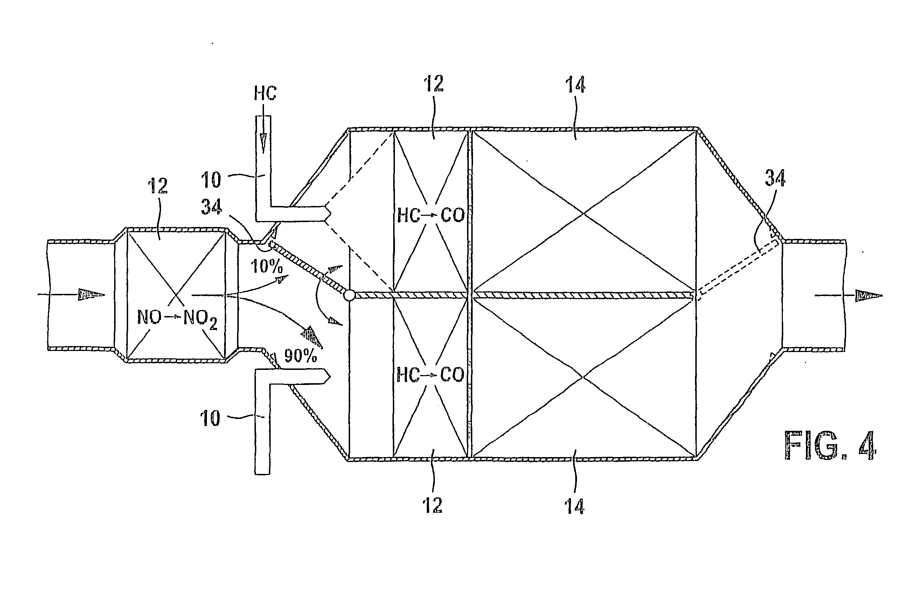

Befindet sich bei der Abgasreinigungsanlage gemäß Figur 3 die Klappe 34, welche den verstellbaren Strömungsteiler realisiert hinter der Katalysatoranordnung, so findet in der dargestellten Stellung der Klappe 34 ebenfalls eine Regeneration des Speicherkatalysators 14 statt, während die Reinigung des Hauptabgasstroms in dem DENOX-Katalysator 32 erfolgt. Verschwenkt man die Klappe 34 hinter der Katalysatoranordnung so, dass der Abgashauptstrom durch den zweiten Oxidationskatalysator 12 und den Speicherkatalysator 14 verläuft, so findet auf diesem Weg die Abgasreinigung statt. Als vorteilhaft ist bei der Variante mit der Klappe hinter der Katalysatoranordnung zu nennen, dass aufgrund der Abwesenheit der Klappe 34 vor der Katalysatoranordnung eine bessere Durchströmung der gesamten Katalysatoranordnung mit Abgas stattfindet, was einen besseren Wärmehaushalt zur Folge hat. In Figur 4 ist eine Abgasreinigungsanlage dargestellt, welche in weiten Teilen der Ausfuhungsform gemäß Figur 3 entspricht. Im Unterschied zu der Ausführungsform gemäß Figur 3 ist kein DENOX-Katalysator vorgesehen. Vielmehr sind zwei parallel angeordnete zweite Oxidationskatalysatoren 12 und Speicherkatalysatoren 14 vorgesehen. Aufgrund der Anordnung einer zweiten Zufuhreinrichtung 10 kann wahlweise ein Paar aus Oxidationskatalysator 12 und Speicherkatalysator 14 regeneriert werden, während das andere Paar aus Oxidationskatalysator 12 und Speicherkatalysator 14 zur Abgasreinigung verwendet wird.

Betrachtet man die Ausführungsform gemäß Figur 4 mit einer Klappe 34 vor der Katalysatoranordnung, wobei hinter der Katalysatoranordnung keine Klappe vorgesehen ist, so findet in der dargestellten Klappenstellung eine Regeneration des Speicherkatalysators 14 des oberen Katxlysatorpaares 12, 14 statt, wobei ein Reduktionsmittel von der oberen Zuführeinrichtung 11 zugeführt wird. Die untere Zuführeinrichtung führt während dieser Zeit keinen Kraftstoff zu, und das untere Katalysatotpaar 12, 14 dient der Abgasreinigung.

Hier durchströmt der Abgashauptstrom in einer ersten Stellung des verstellbaren Strömungsteilers einen ersten Speicherkatalysator , wobei der Abgashauptstrom in einer zweiten Stellung des verstellbaren Strömungsteilers einen zweiten Speicherkatalysator durchströmt, wobei eine erste Zuführeinrichtung zum Zuführen eines Reduktionsmittels zu dem Abgasteilstrom in der ersten Stellung des verstellbaren Strömungsteilers vorgesehen ist und wobei eine zweite Zuführeinrichtung zum Zuführen eines Reduktionsmittels zu dem Abgasteilstrom in der zweiten Stellung des verstellbaren Strömungsteilers vorgesehen ist. Auf diese Weise ist es möglich, permanent eine Abgasreinigung mit einem Speicherkatalysator vorzunehmen. Es wird wahlweise einer der Speicherkatalysatoren zur Abgasreinigung verwendet, während der andere Speicherkatalysator gleichzeitig regeneriert wird. Dies steigert den Wirkungsgrad der NOₓ-Speicherung und bietet eine Verbesserung im Hinblick auf die zeitlichen Freiheiten beim Einspeichern und beim Reduzieren.

Wenn man einen weiteren Speicherkatalysator vorsieht, um das Abgas während der Regenerierung des jeweils anderen Speicherkatalysators zu reinigen, ist man im Hinblick auf die zeitliche Einteilung von Einspeichern und Regenerieren besonders flexibel.

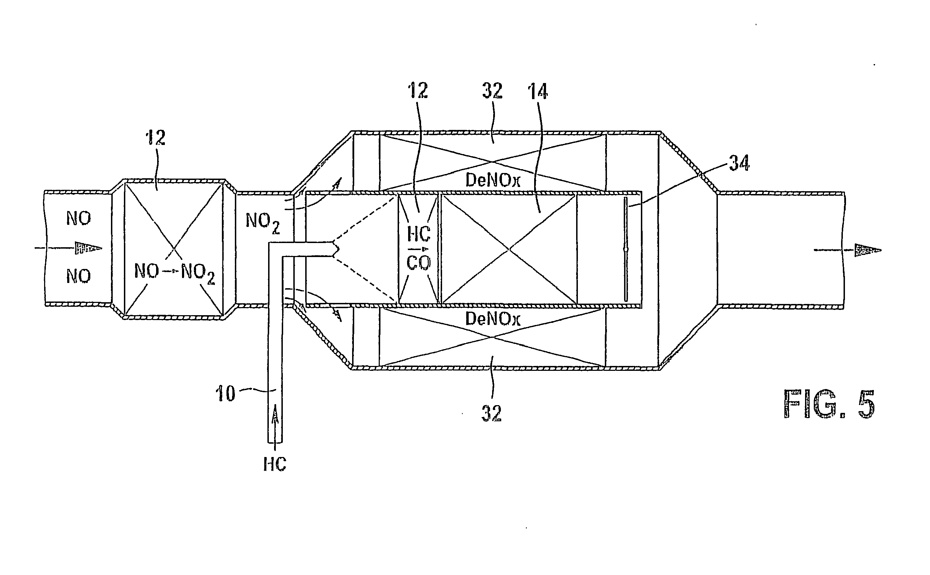

Figur 5 zeigt eine erfindungsgemäße Abgasreinigungsanlage mit DENOX-Katalysator, welche vergleichbar mit der Abgasreinigungsanlage gemäß Figur 3 ist. Im Unterschied zu Figur 3 sind hier der zweite Oxidationskatalysator 12 und der Speicherkatalysator 14 von einem DENOX-Katalysator 32 umgeben. Die dargestellte Stellung der Klappe 34 ist die Regenerationsstellung der Klappe 34, da hier nur ein Abgasteilstrom, welcher von einer zentral angeordneten Zuführeinrichtung 10 mit einem Reduktionsmittel versetzt wird, den Speicherkatalysator 14 durchströmt. Der Abgashauptstrom wird von dem den Speicherkatalysator 14 umgebenden DENOX-Katalysator 32 gereinigt. Die zentrale Anordnung des Speicherkatalysators 14, umgeben von einem DENOX-Katalysator 32 hat wiederum Vorteile im Hinblick auf den Wärmehaushalt der Anordnung, was die Abgasreinigung im Speicherkatalysator begünstigt.

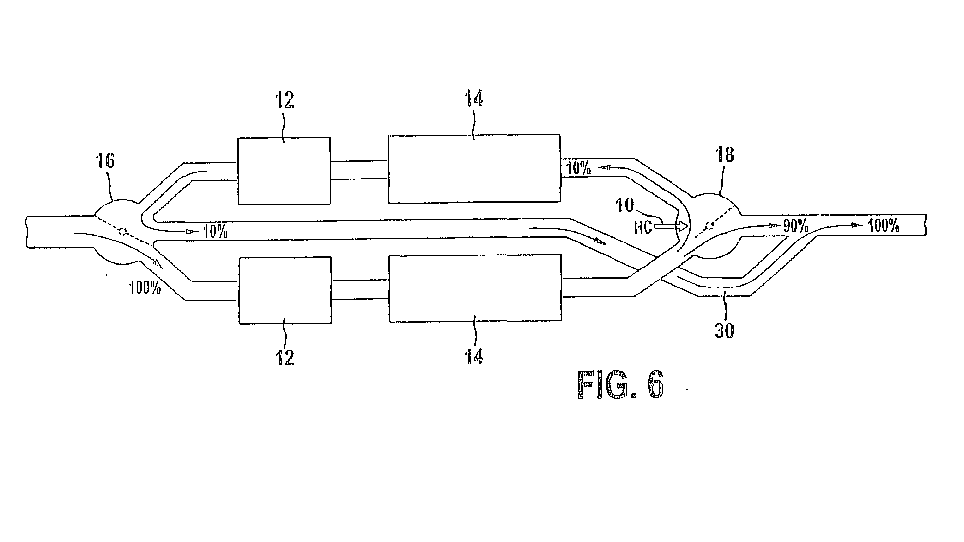

In Figur 6 ist eine weitere Abgasreinigungsanlage schematisch dargestellt. Diese umfasst eine Umschalteinrichtung 16, an welcher drei separate Abgaswege anschließen. Zwei dieser Abgaswege umfassen jeweils ein Katalysatorpaar 12, 14, wobei jedes Katalysatorpaar 12, 14 aus einem Oxidationskatalysator 12 und einem Speicherkatalysator 14 besteht. Hinter den Speicherkatalysatoren 14 der jeweiligen Katalysatorpaare 12, 14 vereinigen sich die beiden Abgaswege in einem umschaltbaren Strömungsteiler 18. Hinter dem umschaltbaren Strömungsteiler 18 mündet der dritte Abgasweg 30. Im Bereich des umschaltbaren Strömungsteilers 18 ist eine Zuführeinrichtung 10 zum Zuführen eines. Reduktionsmittels, beispielsweise HC, angeordnet. Die Zuführeinrichtung 10 umfasst eine Dosiereinheit und gegebenenfalls auch einen katalytischen Mischer zur Erzeugung von Kohlenmonoxid (CO). Ebenfalls kann eine Pumpe vorgesehen sein.

Der Abgasstrom wird in der Anordnung gemäß Figur 6 durch die Umschalteinrichtung 16 in eines der Katalysatorpaare 12, 14 geleitet. In der beispielhaft gezeigten Stellung der Umschalteinrichtung 16 wird der Abgasstrom zu 100% in das untere Katalysatorpaar 12, 14 geleitet. Hinter der Umschalteinrichtung 16 durchströmt also zunächst der gesamte Abgasstrom das untere Katalysatorpaar 12, 14. Dort wird der Abgasstrom zuerst durch einen Oxidationskatalysator 12 geleitet und nachfolgend durch einen Speicherkatalysator 14, so dass der Abgasstrom gereinigt wird. Nach dem Speicherkatalysator 14 trifft der Abgasstrom auf einen umschaltbaren Strömungsteiler 18, wo ein Teil des Abgasstroms, beispielsweise 10%, zum oberen Katalysatorpaar 12, 14 rückgeführt wird. Der rückgeführte Teil wird durch die Zuführeinrichtung 10 mit einem Reduktionsmittel, hier HC versetzt. Die verbleibenden 90% des Abgasstroms werden aus der Abgasreinigungsanlage herausgeführt. Der rückgeführte Abgasteilstrom durchströmt zunächst den Speicherkatalysator 14 des oberen Katalysatorpaars 12, 14, so dass eine effiziente Regeneration des Speicherkatalysators erfolgen kann, ohne dass das Reduktionspotential des Abgasteilstroms durch ein vorheriges Durchströmen eines Oxidationskatalysators verringert worden wäre. Nach dem Durchströmen des Speicherkatalysators 14 wird der Abgasteilstrom dem Oxidationskatalysator 12 des oberen Katalysatorpaars 12, 14 zugeführt, wobei Nebenprodukte in vorteilhafter Weise umgesetzt werden. Nach dem Durchströmen des Oxidationskatalysators 12 trifft der Abgasteilstrom wieder auf die Umschalteinrichtung 16 und wird dort in einen separaten Abgasweg 30 geleitet. Dieser separate Abgasweg 30 führt den Abgasteilstrom hinter dem umschaltbaren Strömungsteiler dem Abgasstrom zu, so dass der Abgasteilstrom zusammen mit dem Abgasstrom in die Umwelt emittiert werden kann. In der vorliegenden Darstellung gemäß Figur 6 führt also das untere Katalysatorpaar 12, 14 eine Reinigungsfunktion aus, während der Speicherkatalysator 14 des oberen Katalysatorpaars 12, 14 regeneriert wird. Soll hingegen der Speicherkatalysator 14 des unteren Katalysatorpaars 12, 14 regeneriert werden, so wird die Umschalteinrichtung 16 in der Weise verstellt, dass der Hauptabgasstrom anfänglich das obere Katalysatorpaar 12, 14 durchströmt. Ebenso wird der umschaltbare Strömungsteiler 18 in eine Stellung gebracht, so dass der mit Reduktionsmittel versetzte Abgasteilstrom das untere Katalysatorpaar 12, 14 durchströmt.

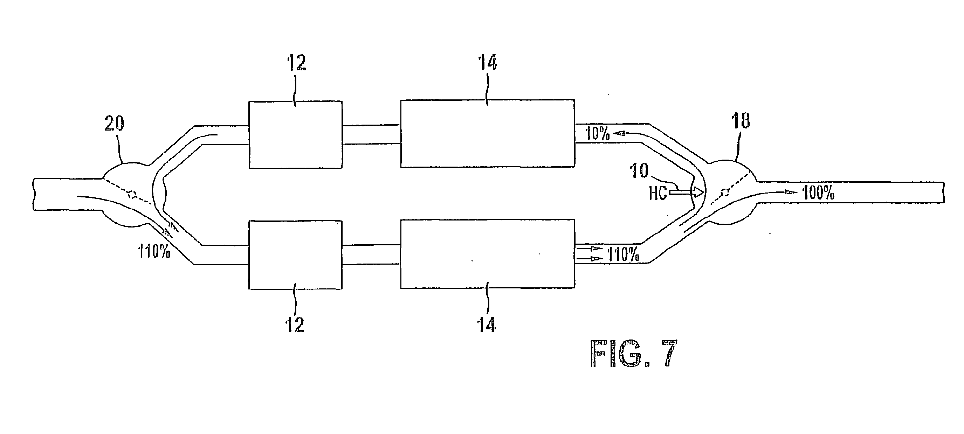

Figur 7 zeigt ein weiteres Abgasreinigungssystem. Der Abgasweg verzweigt sich bei einem umschaltbaren Strömungsteiler 20 zu einem oberen Katalysatorpaar 12, 14 und einem unteren Katalysatorpaar 12, 14. Jedes der Katalysatorpaare 12, 14 besteht aus einem Oxidationskatalysator 12 und einem Speicherkatalysator 14. Hinter den Speicherkatalysatoren 14 vereinigen sich die Abgaswege zu einem weiteren umschaltbaren Strömungsteiler 18. Im Bereich des umschaltbaren Strömungsteilers 18 ist eine Zuführeinrichtung 10 vorgesehen, welche dem Zuführen eines Reduktionsmittels, beispielsweise Kraftstoff (HC), dient.

Das in die Abgasreinigungsanlage gemäß Figur 7 strömende Abgas wird bei der dargestellten Stellung des umschaltbaren Strömungsteilers 20 nahezu vollständig zum unteren Katalysatorpaar 12, 14 geleitet. Dort durchströmt der Abgasstrom zunächst den Oxidationskatalysator 12 und danach den Speicherkatalysator 14, so dass der Abgasstrom gereinigt wird. Nach dem Verlassen des Speicherkatalysators 14 wird der Abgasstrom in dem umschaltbaren Strömungsteiler 18 aufgeteilt. Dabei wird ein Abgasteilstrom erzeugt, welcher zum oberen Katalysatorpaar 12, 14 zurückgeführt wird. Der Abgasteilstrom wird von der Zuführeinrichtung 10 mit einem Reduktionsmittel, hier HC, angereichert. Der Hauptabgasstrom verlässt die Abgasreinigungsanlage und wird in die Umwelt emittiert. Im oberen Katalysatorpaar durchströmt der Abgasteilstrom zunächst den Speicherkatalysator 14, wobei dieser durch die Anwesenheit des Reduktionsmittels regeneriert wird. Nachfolgend durchströmt der Abgasteilstrom den Oxidationskatalysator 12, wobei Nebenprodukte umgesetzt werden. Nach dem Verlassen des Oxidationskatalysators 12 trifft der Abgasteilstrom wieder auf den umschaltbaren Strömungsteiler 20, wo er mit dem ursprünglich in die Abgasreinigungsanlage einströmenden Abgasstrom zusammengeführt wird. Bei der in Figur 7 dargestellten Ausführungsform ist es also nicht erforderlich, einen separaten Abgasweg für das Ausstoßen des Abgasteilstroms vorzusehen, da dieser im Bereich des in Strömungsrichtung vor der Katalysatoranordnung angeordneten umschaltbaren Strömungsteilers 20 dem Abgashauptstrom zugeführt wird. Die Anordnung gemäß Figur 7 hat den weiteren Vorteil, dass der Wärmehaushalt der Katalysatoren verbessert wird. Durch die exothermen Reaktionen während der Regeneration wird der Abgasteilstrom erhitzt. Diese Energie wird genutzt, um den anderen Speicherkatalysator 14, welcher gerade nicht regeneriert sondern beladen wird, auf seiner Arbeitstemperatur zu halten.

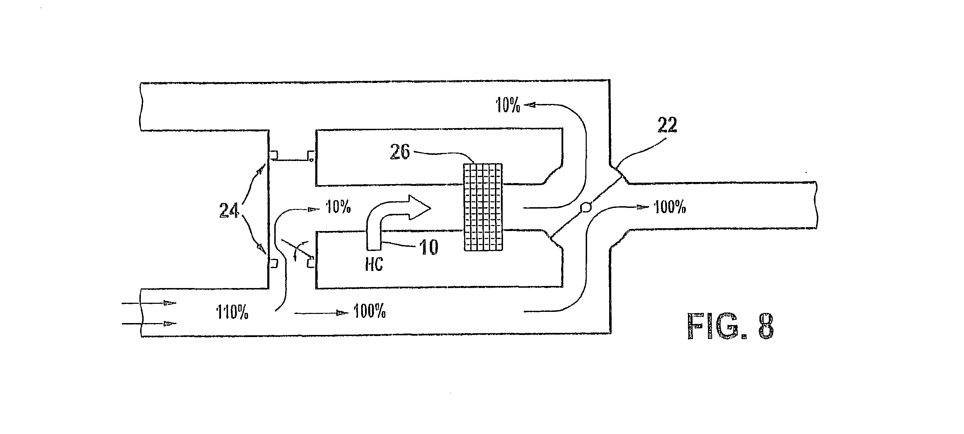

In Figur 8 ist ein Beispiel für die Realisierung des in Strömungsrichtung hinter der Katalysatoranordnung angeordneten umschaltbaren Strömungsteilers dargestellt. Die Anordnung umfasst ein 2/2-Ventil 22, über dessen Stellung bestimmt wird, welches Katalysatorpaar welche Funktion übernimmt. Ferner sind zwei Rückschlagventile 24 vorgesehen. Zwischen den Rückschlagventilen 24 ist ein Abgasweg zu dem 2/2-Ventil vorgesehen, in welchem eine Zuführeinrichtung 10 und ein katalytischer Mischer 26 angeordnet sind. In der vorliegenden Stellung des 2/2-Ventils 22 gemäß Figur 8 befindet sich der Hauptabgasstrom im unteren Abgasweg. Durch den Abgasdruck öffnet das untere der Rückschlagventile 24, so dass ein Abgasteilstrom in den Bereich der Zuführeinrichtung 10 einströmen kann. Dort wird es mit einem Reduktionsmittel, hier Kraftstoff (HC), versetzt, so dass die Mischung nachfolgend einen katalytischen Mischer 26 durchströmt. Die Mischung erreicht das 2/2-Ventil und wird in den oberen Abgasweg zurückgeführt. Das obere Rückschlagventil 24 ist bei der vorliegenden Stellung des 2/2-Ventils 26 aufgrund der Druckverhältnisse geschlossen. Wird das 2/2-Ventil in seine andere Schaltstellung gebracht, so schließt das untere Rückschlagventil 24 und das obere Rückschlagventil öffnet, da der Hauptabgasstrom nun dem oberen Abgasweg folgt.

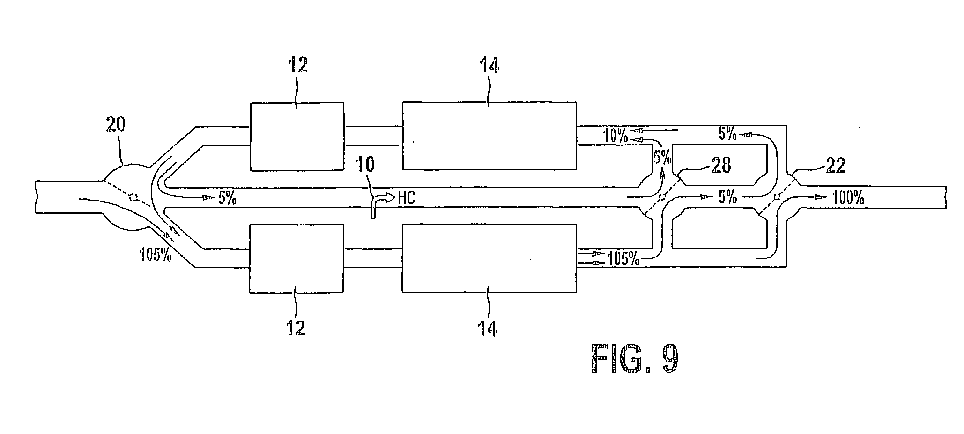

In Figur 9 ist eine weitere Abgasreinigungsanlage dargestellt. Am Eingang der Abgasreinigungsanlage befindet sich ein umschaltbarer Strömungsteiler 20. Von hier aus verzweigt sich die Abgasreinigungsanlage in drei Abgaswege, wobei auf einem unteren Abgasweg und auf einem oberen Abgasweg jeweils ein Katalysatorpaar 12, 14 angeordnet ist. Jedes Katalysatorpaar 12, 14 enthält einen Oxidationskatalysator 12 und einen Speicherkatalysator 14. Hinter der Katalysatoranordnung münden die drei Abgaswege an zwei hintereinanderliegenden Umschalteinrichtungen 28, 22 ineinander, so dass bei geeigneter Stellung der Umschalteinrichtungen 28, 22 ein mehrfaches Durchströmen des Regenerationspfades erreicht werden kann. Auf dem Abgasweg, auf welchem kein Katalysatorpaar angeordnet ist, befindet sich die Zuführeinrichtung 10 zum Zuführen eines Reduktionsmittels.

Die Abgasreinigungsanlage gemäß Figur 9 arbeitet in der gezeigten Einstellung so, dass der einströmende Abgasstrom zunächst vollständig in den unteren Abgasweg eingeleitet wird. Dort durchströmt das Abgas zunächst einen Oxidationskatalysator 12 und nachfolgend einen Speicherkatalysator 14. Das aus dem Speicherkatalysator 14 ausströmende Abgas wird an einer ersten Verzweigung aufgeteilt, wobei ein Abgasteilstrom von beispielsweise 5% gebildet wird. Dieser Abgasteilstrom trifft auf eine erste Umschalteinrichtung 28. Diese Umschalteinrichtung 28 leitet in der vorliegenden Stellung den Abgasteilstrom zu einer zweiten Umschalteinrichtung 22, wo eine Rückführung des Abgasteilstroms veranlasst wird. Der rückgeführte Abgasteilstrom durchströmt dann den Speicherkatalysator 14 und den Oxidationskatalysator 12 des oberen Katalysatorpaars. Es liegt also eine Abgasrückführung vor, welche ebenfalls im Hinblick auf den Wärmehaushalt der Anordnung vorteilhaft ist. Der rückgeführte Abgasstrom, welcher aus dem Oxidationskatalysator 12 austritt, wird nun teilweise einem separaten Abgasweg ohne Katalysator zugeleitet und teilweise dem unteren Abgasweg mit dem unteren Katalysatorpaar 12, 14 zugeleitet. In dem separaten Abgasweg wird dem Abgasteilstrom durch die Zuführeinrichtung 10 ein Reduktionsmittel zugeführt. Der Abgasteilstrom wird von der ersten Umschalteinrichtung 28 umgeleitet und mit dem Abgasteilstrom, welcher von der zweiten Umschalteinrichtung 22 umgeleitet wurde, zusammengeführt. Somit durchströmt eine Mischung des rückgeführten Abgases und des mit dem Reduktionsmittel angereicherten Abgasteilstroms den zu regenerierenden Speicherkatalysator 14 des oberen Katalysatorpaares 12, 14. Aufgrund der mehrfachen Durchströmung hat die Anordnung gemäß Figur 9 neben dem verbesserten Wärmehaushalt den Vorteil, dass die Menge an zuzuführendem Reduktionsmittel weiter verringert wird. Es erfolgt eine schnellere Generierung eines Kraftstoff-Luft-Verhältnisses von λ < 1.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. Beispielsweise können auch zwei oder mehrere Strömungsteiler vorgesehen sein, insbesondere ein Strömungsteiler vor und ein Strömungsteiler hinter der zumindest zeitweise zu regenerierenden Abgasnachbehandlungseinheit. Beispielsweise kann auch anstelle oder in Kombination mit einer Zuführeinrichtung zum Zuführen eines Reduktionsmittels eine Reduktionsmittelzufuhr bzw. eine Aktivierung der Regeneration durch eine späte innermotorische Nacheinspritzung erfolgen, so dass Kraftstoff in den Abgastrakt gelangt und zu definierten Zeitpunkten in Verbindung mit einer definierten Strömungsteilerstellung die gewünschten Regenerationsprozesse ermöglicht.

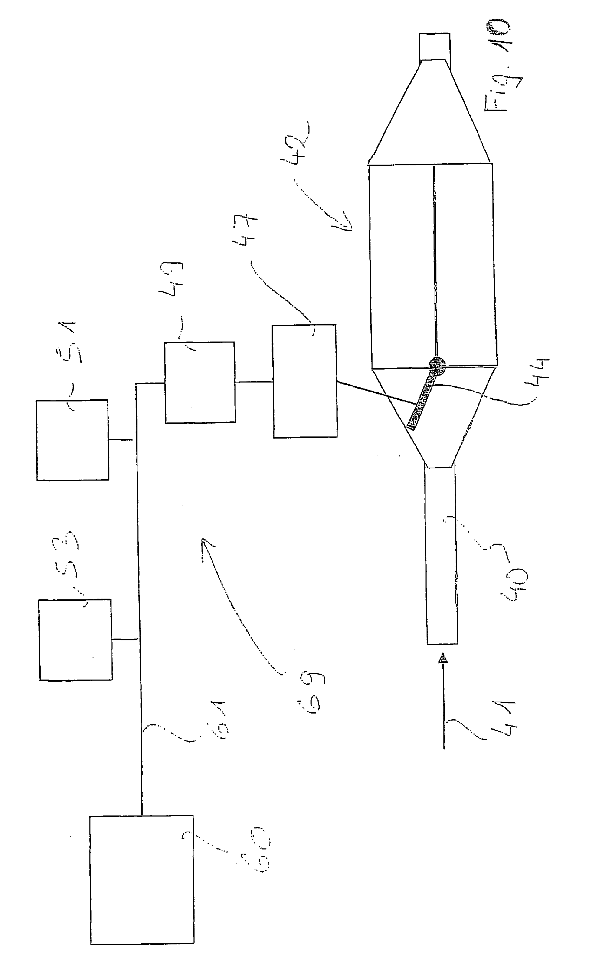

Figur 10 zeigt schematisch dargestellt eine Tandemkatalysatoranordnung 42, die in einer von einer Brennkraftmaschine stammenden Abgase 41 führenden Abgasleitung 40 angeordnet ist. Den beiden Katalysatoren des Tandemkatalysators in Strömungsrichtung vorgelagert ist ein verstellbarer Strömungsteiler 44. Mittels des Strömungsteilers 44 kann in, wie in den vorangegangenen Beispielen bereits beschrieben, der Abgasstrom auf einen der beiden parallel angeordneten Katalysatorpfade konzentriert oder in einem bestimmten Verhältnis auf die beiden Pfade verteilt werden. Die nicht näher dargestellte Verstellmechanik des Strömungsteilers 44 ist mit einer Pneumatikanordnung 69 verbunden. Eine beispielsweise als Servopumpe ausgeführte Pumpe 60 versorgt hierbei eine mit Luft gefüllte Unterdruckleitung 61 mit Unterdruck. Diese Unterdruckleitung wiederum ist mit verschiedenen Elektropneumatikwandlern 49, 51 und 53 verbunden. Der Elektropneumatikwandler 51 ist beispielsweise der Ladedruckregelung zugeordnet, der Elektropneumatikwandler 53 der Verstellmechanik zur Abgasrückführung. Zusätzlich zu diesen Pneumatikvorrichtungen für bekannte, hier nicht näher dargestellte Kraftfahrzeugeinrichtungen wird der weitere Elektropneumatikwandler 49 ebenfalls über die gemeinsame Unterdruckleitung 61 versorgt. Er steht über eine Unterdruckdose 47 mit der Verstellmechanik des Strömungsteilers 44 in Verbindung.

Die Betätigung des Strömungsteilers 44 kann über den elektrisch ansteuerbaren Elektropneumatikwandler 49 erfolgen. Der Wandler 49 steuert den Luftdruck bzw. den Wert des Unterdrucks in der als Unterdruckdose bezeichneten Kammer. Entsprechend verstellt eine (nicht näher dargestellte) federbelastete Verstellmechanik die Position des Strömungsteilers. Dabei sind auch Zwischenstellungen realisierbar. Hierbei dient die Feder zur Rückstellung in eine Ausgangslage, während die auf einen in die Unterdruckdose ragenden Stempel wirkende Kraft den Strömungsteiler in die maximal mögliche entgegengesetzte Position schieben kann. Die Servopumpe wird vom Motor des Kraftfahrzeugs angetrieben und versorgt bereits das Bremsensystem mit Unterdruck zur Verstärkung der Bremskraft (in Figur 10 nicht dargestellt), ebenso die elektropneumatischen Wandler für die Abgasrückführungs- bzw. Ladedruclcmgelungsmechanik. Die elektropneumatischen Wandler 49, 51 und 53 können vom Motorsteuergetät elektrisch angesteuert werden.

Ähnliche Anordnungen sind ebenso für eine Partikelfilterung vorteilhaft anwendbar. Hierbei kann die Aktivierung der Regeneration des Entstickungskatalysators beziehungsweise des Partikelfilters durch die Zugabe eines Reaktionsmittels, beispielsweise eines Reduktionsmittels im Falle einer Abgasentstickung und eines Oxidationsmittels im Falle einer Partikeliuterung, erfolgen. Alternativ oder in Kombination mit der Zugabe eines Reaktionsmittels kann in vorteilhafter Weise eine Aktivierung durch das Vorsehen einer elektrischen Heizung vorgesehen sein. Im Falle einer Partikelfilterung ist statt eines Tandemkatalysators, also einer Parallelschaltung zweier Eatstickungskatalysatoren, eine Parallelschaltung zweier Partikelfilter vorzusehen.

## Patentansprüche

1. Abgasreinigungsanlage zur Reinigung des Abgases einer Brennkraftmaschine, mit einer Abgasnachbehandlungseinheit, wobei mindestens ein verstellbarer Strömungsteiler (34; 44) vorgesehen ist, mittels welchem in einer Stellung zur Regeneration der Abgasnachbehandlungseinheit ein erster Teilstrom des Abgases erzeugbar ist, welcher die Abgasnachbehandlungseinheit (14) durchströmt, wobei ein verbleibender zweiter Teilstrom mindestens eine weitere Abgasnachbehandtungseinheit (12, 14, 32) durchströmt, **dadurch gekennzeichnet, dass** der Strömungsteiler pneumatisch, insbesondere elektropneumatisch, verstellbar ist und dass eine Verstellmechanik des Strömungsteilers mit einer für weitere pneumatisch betätigbare Kraftfahrzeugeinrichtungen (51; 53) geeigneten Pneumatikanordnung (69) verbindbar (47, 49) ist, wobei die Abgasnachbehandlungseinheit eine einen Speicherkatalysator (14) enthaltende Katalysatoranordnung aufweist und die weitere Abgasnachbebandlungseinheit einen DENOX-Katalysator (32) aufweist, wobei der DENOX-Katalysator (32) parallel zu und in baulicher Einheit mit dem Speicherkatalysator (14) angeordnet ist und den Speicherkatalysator (14) umgibt, und wobei der Abgasnachbehandlungseinheit (14) und der weiteren Abgasnachbehandluogseinheit (12, 14, 32) ein Oxidationslcatalysator (12) nachgeschaltet ist.

2. Abgasreinigungsanlage nach Anspruch 1, **dadurch gekennzeichnet, dass** der Strömungsteiler die Stellung zur Regeneration einnimmt, wenn die Abgasnachbehandlungseinheit zur Regeneration aktiviert ist.

3. Abgasreinigungsanlage nach Anspruch 2, **dadurch gekennzeichnet, dass** die Aktivierung durch das Zufuhren eines Reduktionsmittels in den ersten Teilstrom vor der Abgasnachbehandtungseinheit erfolgt.

4. Abgasreinigungsanlage nach einem der vorhergehenden Ansprüche, **dadurch gekennzeichnet, dass** mindestens eine nachmotorische Zuführeinrichtung (10) zum Zuführen eines Reduktionsmittels in das Abgas vorgesehen ist.

5. Abgasreinigungsanlage nach einem der Ansprüche 1 bis 4, **dadurch gekennzeichnet, dass** der verstellbare Strömungsteiler (34) in Strömungsrichtung hinter der Abgasnachbehandlungseinheit (14) angeordnet ist.

6. Abgasreinigungsanlage nach einem der vorangehenden Ansprüche, **dadurch gekennzeichnet, dass** der verstellbare Strömungsteiler (34) in Strömungsrichtung hinter einem ersten Oxidationskatalysator angeordnet ist.

7. Abgasreinigungsanlage nach einem der vorangehenden Ansprüche, **dadurch gekennzeichnet, dass** der verstellbare Strömungsteiler (34) in Strömungsrichtung vor einem zweiten Oxidationskatalysator angeordnet ist

8. Verfahren zur Abgasreinigung, bei dem ein Abgasstrom durch eine Abgasnachbehandluagseinheit (14) geleitet wird, wobei
- in einer Regenerationsstellung mindestens eines verstellbaren Strömungsteilers (34) ein erster Teilstrom des Abgases erzeugt wird,
- der erste Teilstrom die Abgasnachbehandlungseinheit (14) durchströmt und
- ein verbleibender zweiter Teilstrom mindestens eine weitere Abgasnachbehandlungseinheit durchströmt, **dadurch gekennzeichnet, dass** der Strömungsteiler zur Regeneration der Abgasnachbehandlungseinheit pneumatisch, insbesondere clelctropneumatisch, in die Regenerationsstellung gebracht wird, wobei eine Verstellmechanik des Strömungsteilers über eine für weitere pneumatisch betätigbare Kmftfahrzeugeinrichtungen (51; 53) geeignete Pneumatikanordnung (69) betrieben (47,49) wird, wobei als Abgasnachbehandlungseinheit eine einen Speicherkatalysator (14) enthaltende Katalysatoranordnung und als weitere Abgasnachbehandlungseinheit ein DENOX-Katalysator (32) verwendet wird, wobei der DENOX-Katalysator (32) parallel zu und in baulicher Einheit mit dem Speicherkatalysator (14) angeordnet ist und den Speicherkatalysator (14) umgibt und wobei der Abgasnachbehandlungseinheit (14) und der weiteren Abgasnachbehandlungseinheit (12, 14, 32) ein Oxidationskatalysator (12) nachgeschaltet ist.

9. Verfahren nach Anspruch 8, **dadurch gekennzeichnet, dass** der Strömungsteiler die Stellung zur Regeneration einnimmt, wenn die Abgasnachbehandlungseinheit zur Regeneration aktiviert wird.

10. Verfahren nach Anspruch 9, **dadurch gekennzeichnet, dass** die Aktivierung durch das Zuführen eines Reduktionsmittels in den ersten Teilstrom vor der Abgasnachbehandlungseinheit erfolgt.

11. Verfahren nach einem der Ansprüche 8 bis 10, **dadurch gekennzeichnet, dass** das Reduktionsmittel nachmotorisch zugeführt wird.

12. Verfahren nach einem der Ansprüche 8 bis 11, **dadurch gekennzeichnet.**
- **dass** der Abgasstrom vor dem Erzeugen des ersten Teilstroms einen ersten Oxidationskatalysator (12) durchströmt und
- **dass** der erste Teilstrom einen zweiten Oxidationskatalysator (12) durchströmt.

13. Verfahren nach einem der Ansprüche 8 bis 12, **dadurch gekennzeichnet, dass** der erste und der zweite Teilstrom nach dem Durchströmen der jeweiligen Abgasnachbehandlungseinheiten vereinigt werden.

14. Verfahren nach einem der Ansprüche 8 bis 13, **dadurch gekennzeichnet, dass** nach Durchströmen der Abgasnachbehandlungseinheiten der Abgasstrom durch einen weiteren Oxidationskatalysator (12) geleitet wird.

15. Verfahren nach einem der Ansprüche 8 bis 14, **dadurch gekennzeichnet, dass** als Reduktionsmittel Dieselkraftstoff oder ein Ammuniak-Precursor, beispielsweise Hamstoff, verwendet wird.

## Claims

1. Exhaust-gas purification system for purifying the exhaust gas from an internal combustion engine, having an exhaust-gas aftertreatment unit, at least one adjustable flow distributor (34; 44) being provided, by means of which a first part-stream of the exhaust gas can be generated in a position for regenerating the exhaust-gas aftertreatment unit, which first part-stream flows through the exhaust-gas aftertreatment unit (14), while a remaining second part-stream flows through at least one further exhaust-gas aftertreatment unit (12, 14, 32), **characterized in that** the flow distributor is pneumatically, in particular electro-pneumatically adjustable, and **in that** an adjustment mechanism of the flow distributor can be connected (47, 49) to a pneumatic arrangement (69) which is suitable for further pneumatically actuable motor vehicle devices (51; 53), the exhaust-gas aftertreatment unit having a catalytic converter arrangement including a storage catalytic converter (14), and the further exhaust-gas aftertreatment unit having a DENOX catalytic converter (32), the DENOX catalytic converter (32) being arranged in parallel with and in a structural unit with the storage catalytic converter (14) and surrounding the storage catalytic converter (14), and an oxidation catalytic converter (12) being connected downstream of the exhaust-gas aftertreatment unit (14) and of the further exhaust-gas aftertreatment unit (12, 14, 32).

2. Exhaust-gas purification system according to Claim 1, **characterized in that** the flow distributor adopts the position for regeneration when the exhaust-gas aftertreatment unit has been activated for regeneration.

3. Exhaust-gas purification system according to Claim 2, **characterized in that** the activation is effected by feeding a reducing agent into the first part-stream upstream of the exhaust-gas aftertreatment unit.

4. Exhaust-gas purification system according to one of the preceding claims, **characterized in that** there is at least one post-engine feed device (10) for feeding a reducing agent into the exhaust gas.

5. Exhaust-gas purification system according to one of Claims 1 to 4, **characterized in that** the adjustable flow distributor (34) is arranged downstream of the exhaust-gas aftertreatment unit (14) as seen in the direction of flow.

6. Exhaust-gas purification system according to one of the preceding claims, **characterized in that** the adjustable flow distributor (34) is arranged downstream of a first oxidation catalytic converter as seen in the direction of flow.

7. Exhaust-gas purification system according to one of the preceding claims, **characterized in that** the adjustable flow distributor (34) is arranged upstream of a second oxidation catalytic converter as seen in the direction of flow.

8. Method for exhaust-gas purification, in which an exhaust-gas stream is passed through an exhaust-gas aftertreatment unit (14), in which method
- a first part-stream of the exhaust gas is generated in a regeneration position of at least one adjustable flow distributor (34),
- the first part-stream flows through the exhaust-gas aftertreatment unit (14), and
- a remaining second part-stream flows through at least one further exhaust-gas aftertreatment unit, **characterized in that** the flow distributor for the regeneration of the exhaust-gas aftertreatment unit is moved pneumatically, in particular electro-pneumatically, into the regeneration position, with an adjustment mechanism of the flow distributor being operated (47, 49) by means of a pneumatic arrangement (69) which is suitable for further pneumatically actuable motor vehicle devices (51; 53), a catalytic converter arrangement which includes a storage catalytic converter (14) being used as the exhaust-gas aftertreatment unit and a DENOX catalytic converter (32) being used as the further exhaust-gas aftertreatment unit, the DENOX catalytic converter (32) being arranged in parallel with and in a structural unit with the storage catalytic converter (14) and surrounding the storage catalytic converter (14), and an oxidation catalytic converter (12) being connected downstream of the exhaust-gas aftertreatment unit (14) and the further exhaust-gas aftertreatment unit (12, 14, 32).

9. Method according to Claim 8, **characterized in that** the flow distributor adopts the position for regeneration when the exhaust-gas aftertreatment unit has been activated for regeneration.

10. Method according to Claim 9, **characterized in that** the activation is effected by feeding a reducing agent into the first part-stream upstream of the exhaust-gas aftertreatment unit.

11. Method according to one of Claims 8 to 10, **characterized in that** the reducing agent is supplied post-engine.

12. Method according to one of Claims 8 to 11, **characterized**
- **in that** the exhaust-gas stream, prior to the production of the first part-stream, flows through a first oxidation catalytic converter (12), and
- **in that** the first part-stream flows through a second oxidation catalytic converter (12).

13. Method according to one of Claims 8 to 12, **characterized in that** the first and second part-streams are combined after they have flowed through the respective exhaust-gas aftertreatment units.

14. Method according to one of Claims 8 to 13, **characterized in that** after it has flowed through the exhaust-gas aftertreatment units, the exhaust-gas stream is passed through a further oxidation catalytic converter (12).

15. Method according to one of Claims 8 to 14, **characterized in that** the reducing agent used is diesel fuel or an ammonia precursor, for example urea.

## Revendications

1. Installation d'épuration des gaz d'échappement pour épurer les gaz d'échappement d'un moteur à combustion interne, comprenant une unité de retraitement des gaz d'échappement, au moins un répartiteur d'écoulement réglable (34 ; 44) permettant, lorsque l'unité de retraitement des gaz d'échappement se trouve dans une position de régénération, de régénérer un premier courant partiel des gaz d'échappement qui traverse l'unité de retraitement des gaz d'échappement (14), et un deuxième courant partiel résiduel qui traverse au moins une autre unité de retraitement des gaz d'échappement (12, 14, 32),
**caractérisée en ce que**
le répartiteur d'écoulement est réglable pneumatiquement, notamment électropneumatiquement, et un système mécanique de réglage du répartiteur d'écoulement peut être relié (47, 49) à un dispositif pneumatique (69) approprié pour d'autres systèmes à actionnement pneumatique du véhicule automobile (51, 53), l'unité de retraitement des gaz d'échappement présente un système de catalyseurs contenant un catalyseur à accumulation (14) et l'autre unité de retraitement des gaz d'échappement présente un catalyseur DENOX (32), parallèle au catalyseur à accumulation (14) et formé d'une seule pièce avec le catalyseur à accumulation (14) en entourant le catalyseur à accumulation (14), et l'unité de retraitement des gaz d'échappement (14) et l'autre unité de retraitement des gaz d'échappement (12, 14, 32) sont raccordées en aval d'un catalyseur à oxydation (12).

2. Installation d'épuration des gaz d'échappement selon la revendication 1,
**caractérisée en ce que**
le répartiteur d'écoulement prend une position de régénération lorsque l'unité de retraitement des gaz d'échappement est activée pour la régénération.

3. Installation d'épuration des gaz d'échappement selon la revendication 2,
**caractérisée en ce que**
l'activation s'effectue en amenant un moyen réducteur dans le premier courant partiel, en amont de l'unité de retraitement des gaz d'échappement.

4. Installation d'épuration des gaz d'échappement selon l'une quelconque des revendications précédentes,
**caractérisée en ce qu'**
au moins un dispositif d'amenée en aval du moteur (10) est prévu pour amener un moyen réducteur dans les gaz d'échappement.

5. Installation d'épuration des gaz d'échappement selon l'une quelconque des revendications 1 à 4,
**caractérisée en ce que**
le répartiteur d'écoulement réglable (34) est disposé dans la direction d'écoulement derrière l'unité de retraitement des gaz d'échappement (14).

6. Installation d'épuration des gaz d'échappement selon l'une quelconque des revendications précédentes,
**caractérisée en ce que**
le répartiteur d'écoulement réglable (34) est disposé dans la direction d'écoulement derrière un premier catalyseur à oxydation.

7. Installation d'épuration des gaz d'échappement selon l'une quelconque des revendications précédentes,
**caractérisée en ce que**
le répartiteur d'écoulement réglable (34) est disposé dans la direction d'écoulement devant un deuxième catalyseur à oxydation.

8. Procédé d'épuration des gaz d'échappement, selon lequel
- un courant de gaz d'échappement est dirigé à travers une unité de retraitement des gaz d'échappement (14),
- on génère un premier courant partiel des gaz d'échappement dans une position de régénération d'au moins un premier répartiteur d'écoulement réglable (34), le premier courant partiel traversant l'unité de retraitement des gaz d'échappement (14), et
- un deuxième courant partiel résiduel traverse au moins une autre unité de retraitement des gaz d'échappement,
**caractérisé en ce que**
le répartiteur d'écoulement servant à régénérer l'unité de retraitement des gaz d'échappement est amené dans la position de régénération, pneumatiquement, en particulier électropneumatiquement, un système mécanique de réglage du répartiteur d'écoulement est entraîné (47, 49) par un dispositif pneumatique (69) approprié pour d'autres systèmes à actionnement pneumatique du véhicule automobile (51, 53), on utilise un système de catalyseurs contenant un catalyseur à accumulation (14) pour servir d'unité de retraitement des gaz d'échappement, et un catalyseur DENOX (32) pour l'autre unité de retraitement des gaz d'échappement, le catalyseur DENOX (32) est parallèle au catalyseur à accumulation (14) et formé d'une seule pièce avec le catalyseur à accumulation (14) en entourant le catalyseur à accumulation (14), et un catalyseur à oxydation (12) est raccordé en aval de l'unité de retraitement des gaz d'échappement (14) et de l'autre unité de retraitement des gaz d'échappement (12, 14, 32).

9. Procédé selon la revendication 8,
**caractérisé en ce que**
le répartiteur d'écoulement prend la position de régénération lorsque l'unité de retraitement est activée pour la régénération.

10. Procédé selon la revendication 9,
**caractérisé en ce que**
l'activation s'effectue en amenant un moyen réducteur dans le premier courant partiel, en amont de l'unité de retraitement des gaz d'échappement

11. Procédé selon l'une quelconque des revendications 8 à 10,
**caractérisé en ce que**
le moyen réducteur est amené en aval du moteur.

12. Procédé selon l'une quelconque des revendications 8 à 11,
**caractérisé en ce que**
- le courant de gaz d'échappement traverse un premier catalyseur à oxydation (12) avant la génération du premier courant partiel, et
- le premier courant partiel traverse un deuxième catalyseur à oxydation (12).

13. Procédé selon l'une quelconque des revendications 8 à 12,
**caractérisé en ce que**
le premier et le deuxième courant partiel sont réunis après avoir traversé les unités respectives de retraitement des gaz d'échappement.

14. Procédé selon l'une quelconque des revendications 8 à 13,
**caractérisé en ce qu'**
après avoir traversé les unités de retraitement des gaz d'échappement, le courant de gaz d'échappement est dirigé par un autre catalyseur à oxydation (12).

15. Procédé selon l'une quelconque des revendications 8 à 14,
**caractérisé en ce qu'**
on utilise un carburant diesel ou un précurseur à ammoniaque, par exemple de l'urée, pour servir de moyen réducteur.
